# EUROPÄISCHE PATENTSCHRIFT

(11) **EP 1 219 503 B1**
(45) Veröffentlichungstag und Bekanntmachung des Hinweises auf die Patenterteilung: **07.09.2005**
(21) Anmeldenummer: 01130897.0
(22) Anmeldetag: 27.12.2001
(51) Int. Cl.: B60R 21/16

(54) **Gassack-Rückhalteeinrichtung**
Airbag restraint system
Sac gonflable de retenue

(30) Priorität: 28.12.2000 DE 20022018 U
(43) Veröffentlichungstag der Anmeldung: 03.07.2002
(73) Patentinhaber: TRW Automotive Safety Systems GmbH, 63743 Aschaffenburg (DE)
(72) Erfinder: Fellhauer, Joachim, 63741 Nilkheim (DE); Neupert, Ralph, 63839 Kleinwallstadt (DE)
(74) Vertreter: Kitzhofer, Thomas

(56) Entgegenhaltungen:
- DE-A- 19 904 072
- DE-U- 20 010 726
- US-A- 5 887 894
- US-A- 6 042 147

## Beschreibung

Die Erfindung betrifft eine Gassack-Rückhalteeinrichtung, mit einem Gassackmodul, das einen Gassack mit einer Gassackwand aufweist, welche eine Vorderwand aufweist, auf die der zurückzuhaltende Insasse im Rückhaltefall prallen kann und die eine durch eine ringförmige Gassackwand gebildete Einbuchtung hat, indem ein Zentrumsabschnitt der Vorderwand am Modul befestigt ist und beim Aufblasen des Gassacks an einer freien Bewegung, vorzugsweise an jeglicher Bewegung gehindert wird. Eine solche Gassack-Rückhalteeinrichtung ist aus US 6042 147 A bekannt.

Solche ringförmigen Gassäcke haben eine relativ große Ausdehnung in Radialrichtung, da sie sich zuerst schräg radial nach außen entfalten. Der Zentrumsabschnitt wird nicht aktiv auf den Insassen zu bewegt.

Die Erfindung schafft eine Gassack-Rückhalteeinrichtung, bei der die Einbuchtung wenigstens großteils und sicher geschlossen wird. Dies wird bei einer Gassack-Rückhalteeinrichtung der eingangs genannten Art dadurch erreicht, daß an der ringförmigen Gassackwand Haltemittel vorgesehen sind, die beim Aufblasen miteinander in Kontakt kommende Abschnitte der ringförmigen Gassackwand im vollständig aufgeblasenen Zustand des Gassacks aneinander halten und die Einbuchtung wenigstens teilweise schließen. Der Gassack kann sich trotz dieser Haltemittel beim Entfalten zuerst nach außen bewegen und eine Art Ringform ausbilden. Dann kommt es jedoch üblicherweise zu einer dynamischen Bewegung, d.h. die ringförmige, mit Gas zu befüllende Kammer mit der die Einbuchtung definierenden ringförmigen Gassackwand schlägt nach innen, um die Einbuchtung wenigstens teilweise zu schließen. Nach dem ersten Kontakt von Abschnitten der ringförmigen Gassackwand erfolgt bei den Einrichtungen im Stand der Technik eine Bewegung radial nach außen, so daß die Einbuchtung wieder freiliegt. Bei der erfindungsgemäßen Einrichtung hingegen wird der Kontakt beim Zusammentreffen von Abschnitten der ringförmigen Gassackwand durch die Haltemittel aufrechterhalten, so daß zumindest die von der Vorderwand aus gesehene freiliegende Querschnittsfläche der Einbuchtung geringer ist als im Stand der Technik. Vorzugsweise wird die Einbuchtung sogar komplett geschlossen.

Die Haltemittel sind gemäß der bevorzugten Ausführungsform am Eingang der Einbuchtung angeordnet, d.h. unmittelbar am Übergang von der dem Insassen zugewandten Abschnitt der Vorderwand und deren die Einbuchtung bildenden Abschnitt (Zentrumsabschnitt plus ringförmige Gassackwand).

Die Haltemittel sind üblicherweise an gegenüberliegenden Abschnitten der ringförmigen Gassackwand angeordnet und verbinden dann diese Abschnitte.

Die Haltemittel sind beispielsweise adhäsiv ausgeführt oder als Klettverschluß.

Die Einbuchtung wird gemäß der bevorzugten Ausführungsform bei aufgeblasenem Gassack durch die Haltemittel zu einem Schlitz geschlossen.

Ein weiterer Vorteil beispielsweise des Klettverschlusses besteht darin, daß dieser während der Montage des Gassackmoduls zur Fixierung des Luftsacks in einer Faltmaschine dienen kann.

Damit der Kontakt der Absschnitte der Gassackwand auch sichergestellt ist, sind gemäß der bevorzugten Ausführungsform angrenzend an die Einbuchtung Fangbänder vorgesehen, die den Gassack in der Tiefe begrenzen und die die Tiefe der Einbuchtung definieren. Dadurch muß nicht die ringförmige Gassackwand die Tiefenbegrenzung übernehmen und kann radial nach innen ausbeulen.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
Fig. 1 eine Querschnittsansicht der erfindungsgemäßen Gassack-Rückhalteeinrichtung bei vollständig aufgeblasenem Gassack,
Fig. 2 eine Draufsicht auf die Vorderwand des aufgeblasenen Gassacks nach Fig. 1, vom zurückzuhaltenden Insassen aus gesehen, und
Fig. 3a und 3b Abschnitte der ringförmigen Gassackwand, die durch verschiedene Haltemittel beim Aufblasen aneinander gehalten werden.

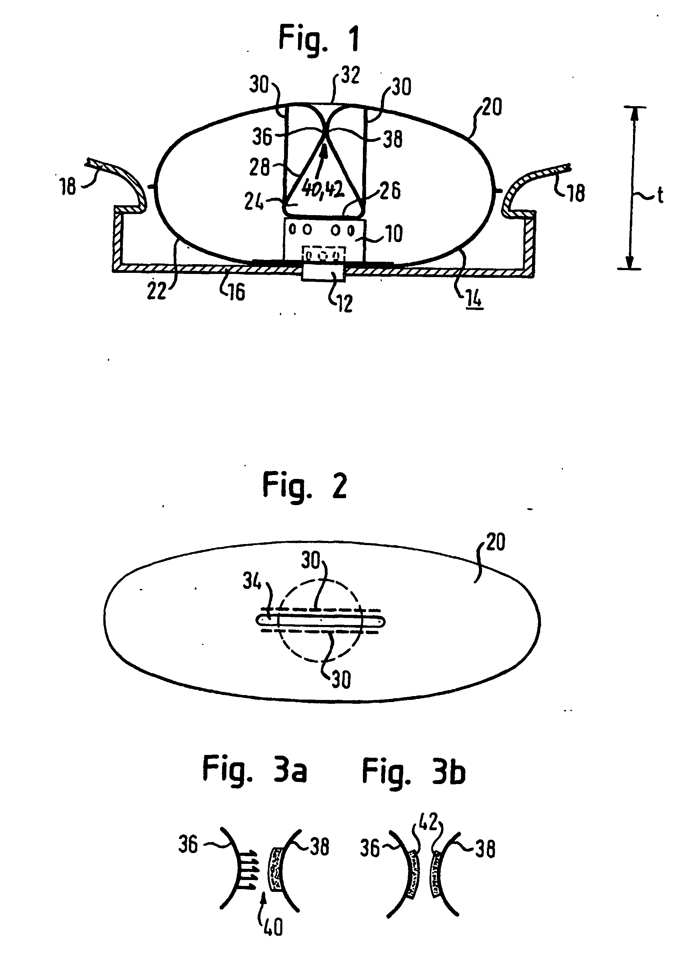

In Fig. 1 ist eine Gassack-Rückhalteeinrichtung mit einem Gassackmodul gezeigt, das einen in einem Diffusor 10 untergebrachten Gasgenerator 12, einen Front-Gassack 14, der bei einem Frontalaufprall wirken soll, und ein Modulgehäuse 16 aufweist, das von einer Abdeckung 18 geschlossen ist. Der Gassack 14 wird durch eine Gassackwand gebildet, die mehrere Abschnitte aufweist, nämlich eine Vorderwand 20, die dem zurückzuhaltenden Insassen zugewandt ist und die dieser im Rückhaltefall kontaktiert, und eine Rückwand 22, die dem Insassen abgewandt ist. Die Vorderwand 20 weist eine mittig angeordnete, tiefe Einbuchtung 24 auf, die dadurch gebildet ist, daß ein Zentrumsabschnitt 26 der Vorderwand bleibend am Diffusor 10 befestigt ist - auch im aufgeblasenen Zustand. Die Einbuchtung 24 wird durch eine ringförmige Gassackwand 28 und den Zentrumsabschnitt 26 definiert. Es ist keine separate Wand vorgesehen, die die Einbuchtung nach außen schließt. Damit der Gassack im Bereich des Eingangs 32 der Einbuchtung 24 aber geschlossen wird, sind nahe der Einbuchtung 24 angrenzend an die ringförmige Gassackwand zwei breite Fangbänder 30, die parallel zueinander angeordnet sind, vorgesehen. Die Fangbänder 30 sind einerseits an der Vorderwand 20 nahe des Eingangs 32 der Einbuchtung 26 angebracht und andererseits am Zentrumsabschnitt 26 der Gassackwand.

Die Fangbänder 30 bestimmen im aufgeblasenen Zustand die Tiefe t des Gassacks und auch die Tiefe der Einbuchtung 24. Die ringförmige Gassackwand 28 muß zu dieser Tiefenbegrenzung nichts beitragen und kann folglich radial nach innen ausbauchen, wie in Fig. 1 gezeigt ist. Auf diese Weise wird die ohne die Fangbänder 30 möglicherweise offene Einbuchtung 24 nahe des Eingangs 32 der Einbuchtung 24 großteils oder sogar vollständig geschlossen. Es ergibt sich der in Fig. 2 gezeigte Schlitz 34. Gegenüberliegende, sich berührende Abschnitte 36, 38 der Gassackwand 28 werden durch Haltemittel miteinander verbunden, so daß auch beim dynamischen Prozeß des Aufblasens die Einbuchtung für den Insassen nicht völlig frei liegt.

Die Haltemittel sind in den Fig. 3a und 3b gezeigt. Gemäß Fig. 3a ist im Bereich der Abschnitte 36, 38 der Gassackwand ein Klettverschluß 40 außenseitig an der Gassackwand 28 angebracht, der die Abschnitte 36, 38 zusammenhält. In Fig. 3a sind die Abschnitte 36, 38 kurz vor ihrem Kontakt gezeigt, wie im übrigen auch in Fig. 3b. In Fig. 3b ist als Haltemittel ein auf der Außenseite der Abschnitte 36, 38 aufgebrachter Klebstoff oder ein Klebeband 42 vorgesehen.

Die Haltemittel können beim Falten des Gassacks in das Modulgehäuse 36 hinein als Halterung des Gassacks dienen.

Der Gassack weist im aufgeblasenen Zustand eine ringförmige, um die Einbuchtung 24 herum verlaufende Kammer auf, in die das Gas vom Gasgenerator einströmt. Die Einbuchtung ist zur Kammer geschlossen und bildet somit keinen aufzublasenden Raum.

Die Gassack-Rückhaltevorrichtung wird entweder im Lenkrad oder in der Armaturentafel eingebaut.

## Patentansprüche

1. Gassack-Rückhalteeinrichtung, mit
einem Gassackmodul, das einen Gassack (14) mit einer Gassackwand aufweist, welche eine Vorderwand (20) hat, auf die der zurückzuhaltende Insasse im Rückhaltefall prallen kann und die eine durch eine ringförmige Gassackwand (28) gebildete Einbuchtung (24) hat, indem ein Zentrumsabschnitt (26) der Vorderwand (20) am Modul befestigt ist und beim Aufblasen des Gassacks (14) an einer Bewegung gehindert wird,
**dadurch gekennzeichnet, daß**
an der ringförmigen Gassackwand (28) Haltemittel (40; 42) vorgesehen sind, die beim Aufblasen des Gassacks miteinander in Kontakt kommende Abschnitte der ringförmigen Gassackwand (28) in vollständig aufgeblasenem Zustand des Gassacks aneinander halten und die Einbuchtung (24) wenigstens teilweise schließen.

2. Gassack-Rückhalteeinrichtung nach Anspruch 1, **dadurch gekennzeichnet, daß** die Haltemittel (40; 42) am Eingang (32) der Einbuchtung (24) angeordnet sind.

3. Gassack-Rückhalteeinrichtung nach Anspruch 1 oder 2, **dadurch gekennzeichnet, daß** die Haltemittel (40; 42) gegenüberliegende Abschnitte (36, 38) der ringförmigen Gassackwand (28) miteinander verbinden.

4. Gassack-Rückhalteeinrichtung nach einem der vorhergehenden Ansprüche, **dadurch gekennzeichnet, daß** adhäsive Haltemittel vorgesehen sind.

5. Gassack-Rückhalteeinrichtung nach einem der vorhergehenden Ansprüche, **dadurch gekennzeichnet, daß** die Haltemittel als Klettverschluß (40) ausgebildet sind.

6. Gassack-Rückhalteeinrichtung nach einem der vorhergehenden Ansprüche, **dadurch gekennzeichnet, daß** die Einbuchtung (24) bei aufgeblasenem Gassack (14) durch die Haltemittel (40; 42) zu einem Schlitz (34) geschlossen ist.

7. Gassack-Rückhalteeinrichtung nach einem der vorhergehenden Ansprüche, **dadurch gekennzeichnet, daß** an die Einbuchtung (24) angrenzende Fangbänder (30) vorgesehen sind, die die Bewegung der Vorderwand (20) nahe des Eingangs (32) der Einbuchtung (24) beim Aufblasen begrenzen.

## Claims

1. A gas bag restraint device, comprising
a gas bag module including a gas bag (14) with a gas bag wall which has a front wall (20) for impact thereon of the occupant to be restrained in a case of restraint, the front wall (20) having an indentation (24) formed by a ring-shaped gas bag wall (28) in that a center portion (26) of the front wall (20) is attached to the module and is prevented from moving when the gas bag (14) is inflated,
**characterized in that**
holding means (40; 42) are provided on the ring-shaped gas bag wall (28) which keep portions of the ring-shaped gas bag wall (28), which get in contact with each other when the gas bag is inflated, against each other in the fully inflated condition of the gas bag, and at least partly close the indentation (24).

2. The gas bag restraint device as claimed in claim 1, **characterized in that** the holding means (40; 42) are disposed at the entrance (32) of the indentation (24).

3. The gas bag restraint device as claimed in claim 1 or 2, **characterized in that** the holding means (40; 42) connect opposite portions (36, 38) of the ring-shaped gas bag wall (28) with each other.

4. The gas bag restraint device as claimed in any of the preceding claims, **characterized in that** adhesive holding means are provided.

5. The gas bag restraint device as claimed in any of the preceding claims, **characterized in that** the holding means are in the form of a Velcro fastener (40).

6. The gas bag restraint device as claimed in any of the preceding claims, **characterized in that** with the gas bag (14) inflated, the indentation (24) is closed by the holding means (40; 42) to form a slot (34).

7. The gas bag restraint device as claimed in any of the preceding claims, **characterized in that** limiting straps (30) are provided which are adjacent to the indentation (24) and limit the movement of the front wall (20) close to the entrance (32) of the indentation (24) during inflation.

## Revendications

1. Dispositif de retenue à coussin à gaz, comportant
un module de coussin à gaz qui présente un coussin à gaz (14) avec une paroi de coussin à gaz qui a une paroi antérieure (20) sur laquelle le passager à retenir peut heurter en cas de retenue et qui a un creux (24) formé par une paroi de coussin à gaz (28) de forme annulaire, par le fait qu'un tronçon central (26) de la paroi antérieure (20) est fixé sur le module et est empêché de se mouvoir lors du gonflage du coussin à gaz (14),
**caractérisé en ce que**
sur la paroi de coussin à gaz (28) de forme annulaire sont prévus des moyens de retenue (40 ; 42) qui, lors du gonflage du coussin à gaz, maintiennent l'un contre l'autre, à l'état entièrement gonflé du coussin à gaz, des tronçons de la paroi de coussin à gaz (28) de forme annulaire venant en contact l'un sur l'autre, et qui ferment le creux (24) au moins partiellement.

2. Dispositif de retenue à coussin à gaz selon la revendication 1, **caractérisé en ce que** les moyens de retenue (40 ; 42) sont agencés à l'entrée (32) du creux (24).

3. Dispositif de retenue à coussin à gaz selon la revendication 1 ou 2, **caractérisé en ce que** les moyens de retenue (40 ; 42) relient l'un à l'autre des tronçons (36, 38) opposés de la paroi de coussin à gaz (28) annulaire.

4. Dispositif de retenue à coussin à gaz selon l'une des revendications précédentes, **caractérisé en ce qu'**il est prévu des moyens de retenue adhésifs.

5. Dispositif de retenue à coussin à gaz selon l'une des revendications précédentes, **caractérisé en ce que** les moyens de retenue sont réalisés sous forme de fermeture Velcro (40).

6. Dispositif de retenue à coussin à gaz selon l'une des revendications précédentes, **caractérisé en ce que** lorsque le coussin à gaz (14) est gonflé, le creux (24) est fermé par les moyens de retenue (40 ; 42) pour former une fente (34).

7. Dispositif de retenue à coussin à gaz selon l'une des revendications précédentes, **caractérisé en ce qu'**il est prévu des bandes de garde (30) adjacentes au creux (24) qui, au gonflage, limitent le mouvement de la paroi antérieure (20) près de l'entrée (32) du creux (24).
